# EUROPEAN PATENT APPLICATION

(11) **EP 0 674 313 A1**
(43) Date of publication of application: **27.09.1995**
(21) Application number: 94200662.8
(22) Date of filing: 15.03.1994
(51) Int. Cl.: G11B 17/08

(54) **Device for feeding electronic data carriers to and discharging same from a read/write unit.**

(71) Applicant: Strang, Frederick Johannes, NL-2742 EG Waddinxveen (NL)
(72) Inventor: Strang, Frederick Johannes, NL-2742 EG Waddinxveen (NL)
(74) Representative: Smulders, Theodorus A.H.J., Ir.

(57) **Abstract**

A device for feeding electronic data carriers, such as diskettes, magnetic tapes, magnetic cards or chip cards, to, and discharging same from, a read/write unit having a discharge opening, which device comprises a feed magazine, a discharge magazine and conveying means for feeding the electronic data carrier to the read/write unit, and means adapted to guide the approved electronic data carriers to the discharge magazine on the one hand and to guide rejected electronic data carriers to a storage space on the other, the read/write unit being inclined, the discharge opening thereof facing obliquely downward, with an inclined conveyor face, which extends in a direction of conveyance, connecting to the discharge opening at an upwardly directed end thereof and to the discharge magazine at a downwardly directed end, such that the conveyance of the electronic data carrier from the read/write unit to the discharge magazine or the storage space takes place under the influence of gravity.

## Description

The invention relates to a device for feeding electronic data carriers, such as diskettes, magnetic tapes, magnetic cards or chip cards, to, and discharging same from, a read/write unit having a discharge opening, which device comprises a feed magazine, a discharge magazine and conveying means for feeding the electronic data carrier to the read/write unit, and means adapted to guide the approved electronic data carriers to the discharge magazine on the one hand and to guide rejected electronic data carriers to a storage space on the other.

Such a device is known from practice and has a number of drawbacks.

In the known device, both the supply and the discharge of the electronic data carrier, such as for instance a diskette, are effected through positive conveying means, with the diskette moving along a substantially horizontal path. The positive conveying means are designed as friction rollers engaging the outer surface of the diskette. This manner of conveying the diskette forms a source of failures in the supply and discharge of diskettes to and from the read/write unit. In the known device, the diskette is removed from the bottom side of a stack of diskettes located in the feed magazine. When the feed magazine still contains quite some diskettes, the weight pressing on the lowest diskette is quite considerable and as a result, the friction force to be overcome between the lowest and the superjacent diskette is quite considerable, when the lowest diskette is to be pushed or drawn away. This quite considerable friction force must be overcome through the positive conveying means whose operation is also based on friction, i.e. by means of friction rollers. When such rollers age, their coefficient of friction changes and the chance that the diskette is no longer carried along from the feed magazine becomes greater and greater. Similar problems also occur in the discharge of the diskettes from the read/write unit to the discharge magazine.

Another considerable drawback of the positive conveying means is that they are of a complex construction and hence they are costly and require much maintenance.

The object of the invention is to modify a device of the type mentioned in the opening paragraph in such a manner that it contains fewer parts for conveying the electronic data carrier, so that the device will be less susceptible to failure, less expensive when purchased and, moreover, capable of functioning with a minimum of maintenance.

To this end, according to the invention, the device is characterized in that the read/write unit is inclined, the discharge opening thereof facing obliquely downward, with an inclined conveyor face, which extends in a direction of conveyance, connecting to the discharge opening at an upwardly directed end thereof and to the discharge magazine at a downwardly directed end, such that the conveyance of the electronic data carrier from the read/write unit to the discharge magazine or the storage space takes place under the influence of gravity.

As the read/write unit is inclined with the discharge opening thereof directed obliquely downward, the electronic data carrier, after having been ejected by the ejector, which is generally present in the read/write unit in a standard way, will, under the influence of gravity, automatically move over the conveyor face from the upwardly directed end thereof, connecting to the discharge opening, in downward direction. Depending on a status, observed by the processing or control electronics, of the electronic data carrier after treatment in the read/write station, for instance treatment successful or treatment failed, the electronic data carrier will be guided to either the discharge magazine or the storage space through the proper means therefor.

According to a further elaboration of the invention, also directed to constructing the device as simple as possible with a minimum of parts, the above-mentioned proper means, adapted on the one hand for guiding the approved electronic data carriers to the discharge magazine and on the other hand for guiding rejected data carriers to a storage space, comprise a folding part of the inclined conveyor face, which folding part of the conveyor face is mounted on a downwardly directed edge thereof for swivelling movement about a pin, which pin extends parallel to the conveyor face and substantially perpendicular to the direction of conveyance, the conveyor face part in a first position forming a continuation of the inclined conveyor face and in a second position releasing an opening in the conveyor face which leads to the storage space for the rejected data carriers, such that the conveyance of the electronic data carriers from the read/write unit to the storage space takes place under the influence of gravity.

In such a swivelling conveyor face part, the electronic data carriers in the first position of the conveyor face part slide downward over the conveyor face part under the influence of gravity and consequently reach the downwardly directed end of the conveyor face which connects to the discharge magazine. When the hinged conveyor face part is in the second position to form the opening in the conveyor face which opens to the storage space, the electronic data carriers automatically slide through the opening into the storage space, under the influence of gravity. For controlling the position of the conveyor face part, an electromagnetically energized tappet can for instance be used, whose position is determined by control electronics coupled to the processing electronics of the read/write unit.

An additional advantage is that in a device of such design, the storage space for the rejected data carriers is located under the inclined conveyor face, hence at a place where space is anyhow created by the inclined conveyor face, necessarily present, which space is thus made good use of.

In accordance with a further elaboration of the invention, it is particularly favorable when the conveying means comprise a first endless conveyor provided with at least one catch finger for bringing an electronic data carrier from the feed magazine into an infeed position, and a second endless conveyor provided with at least one catch finger for bringing the electronic data carrier from the infeed position into the read/write unit.

The advantage of endless conveyors with catch fingers is that positive engagement with the electronic data carriers is indeed involved, preventing the occurrence of slip between the conveying means and the data carrier to be conveyed, as may be the case with friction rollers. Moreover, the position of the catch finger can easily be controlled by driving the endless conveyor by means of, for instance, a stepping motor or a normal electromotor comprising an angle sensor, whereby for instance the position of the motor shaft and, accordingly, of the catch finger is sensed and controlled by the control electronics. The first endless conveyor causes the data carrier to be removed from the magazine and brought into the infeed position, while the second endless conveyor causes the data carrier to be brought from the infeed position into the read/write unit. After the electronic data carrier has undergone a treatment in the read/write unit, the data carrier can be ejected from the read/write unit. Generally, the standard commercially available read/write units comprise an ejector which pushes the data carrier at least partly from the discharge opening and releases it.

According to a further elaboration of the invention, at least a part of the second endless conveyor extends in the direction of conveyance parallel to and directly under the inclined conveyor face, a slot being provided in the conveyor face through which the or each catch finger of the second endless conveyor extends when it is located in the part mentioned.

A conveyor of such design may be built up from standard commercially available parts, rendering the maintenance simple and not very costly. Moreover, the conveyor can also be positioned such that no catch finger is located in the conveyor face, allowing the data carrier, after having been ejected from the read/write unit, to freely move downward over the conveyor face under the influence of gravity.

Further, the feed magazine may be inclined and be provided, near a bottom of the magazine in a side wall facing downward, with a slit extending parallel to the bottom of the magazine and perpendicular to the direction of conveyance, and through which slit the electronic data carriers can be moved from the feed magazine to the lower positioned infeed position, with at least a part of the first endless conveyor extending parallel to, and directly under the bottom of the feed magazine, the bottom being provided with a slot, extending in the direction of conveyance, through which the or each catch finger of the first endless conveyor extends when it is located in this part.

The advantage of an inclined feed magazine is that the weight of a stack of data carriers does not fully rest on the lowest data carrier of the stack but is also partly taken up by the side wall, facing downward, of the feed magazine. This offers the advantage that the lowest data carrier to be pulled or pushed away will undergo less friction from the superjacent data carrier. As a result, the feed magazine can be filled with more data carriers before the friction forces between the data carriers become so great that this becomes problematic. Moreover, as the lowest data carrier is positively engaged by the catch finger, a considerable friction force can be overcome.

When only few data carriers are contained in the feed magazine, the chance occurs that the data carriers, because of the inclined position thereof, unintentionally move through the slit from the feed magazine to the infeed position. To preclude this possibility, in accordance with the invention, it is particularly favorable if the slit is at least partly closed by flexible strips or brushes.

It is appreciated that the read/write unit may be designed to read and write a diskette, a magnetic tape, a magnetic card and/or chip card or similar electronic data carriers.

To explain the invention, an exemplary embodiment of the device will be described hereinafter, with reference to the accompanying drawings. In these drawings:
Fig. 1 is a side view of the device with a side panel taken away, wherein the conveyor face part which is mounted for swivelling movement is in a first position;
Fig. 2 is a similar view as in Fig. 1, wherein the conveyor face part which is mounted for swivelling movement is in a second position; and
Fig. 3 is a perspective view of the device.

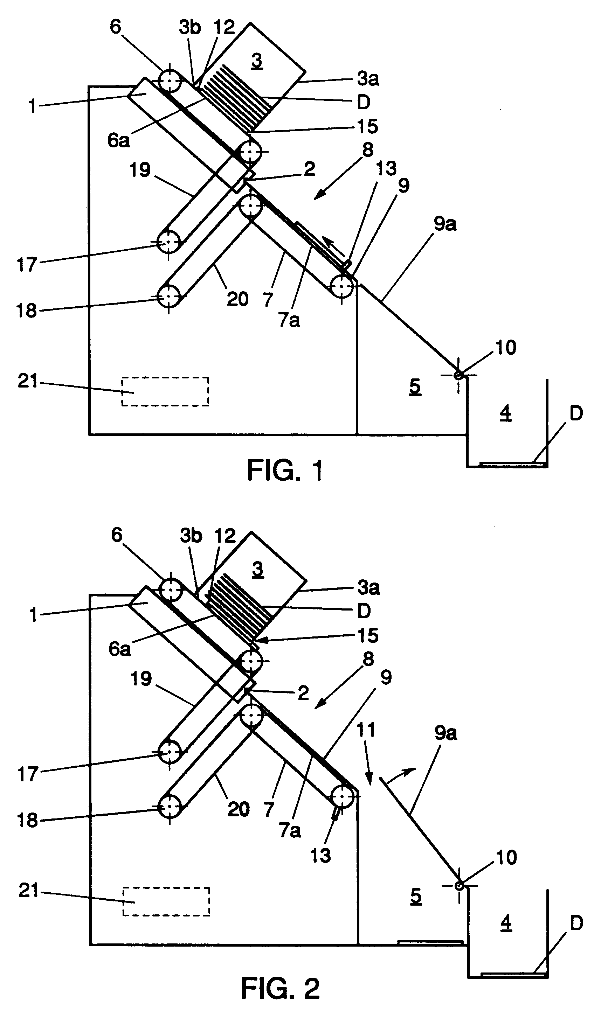

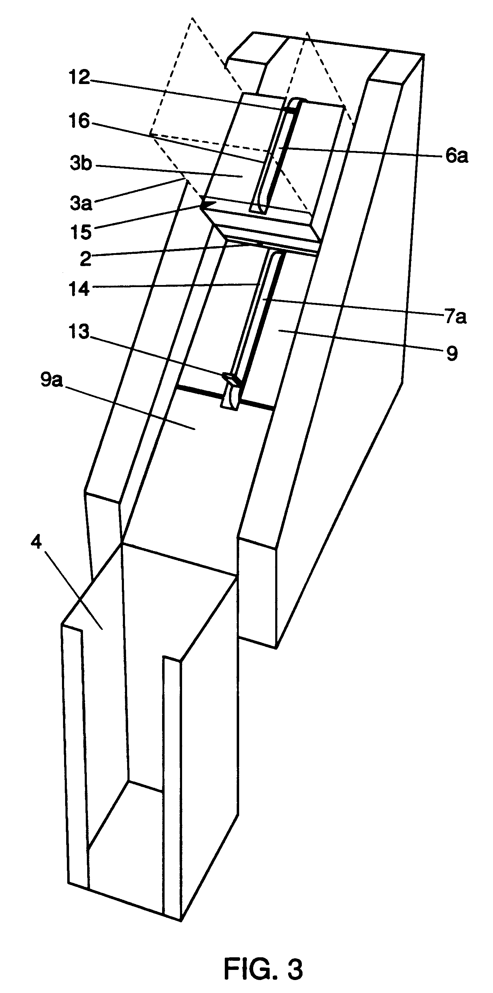

The exemplary embodiment shown in Figs 1-3 is meant for the mass processing of diskettes. It is understood that the invention is not limited to the exemplary embodiment shown, but that a similar device may also be designed for the mass processing of magnetic cards and/or chip cards or other electronic data carriers. By processing, the initialization of diskettes may for instance be meant or the writing of specific data on diskettes, magnetic cards, chip cards or the like. The read/write unit may be connected to an external computer which supplies the data to be placed on the electronic data carrier, or may be connected to so-called dedicated hardware wherein the data to be copied is stored.

The device comprises a read/write unit 1 having a discharge opening 2. The device also comprises a feed magazine 3, a discharge magazine 4, a storage space 5 and conveying means 6, 7 for feeding diskettes from the feed magazine to the read/write unit 1 via an infeed position 8. The read/write unit 1 is inclined, the discharge opening 2 thereof facing obliquely downward. A conveyor face 9, extending in a direction of conveyance, connects to the discharge opening 2 by an upwardly directed end thereof. By a downwardly directed end thereof, the conveyor face 9 connects to the discharge magazine 4. The inclined conveyor face 9 is designed such that the conveyance of the electronic data carrier from the read/write unit 1 to the discharge magazine 4 takes place under the influence of gravity.

The device also comprises means 10, adapted to guide the approved electonic data carriers to the discharge magazine 4 on the one hand and to guide the rejected electronic data carriers to the storage space 5 on the other. These means 10 comprise a folding part 9a of the inclined conveyor face 9. At a downwardly directed edge thereof, the folding part 9a of the conveyor face is mounted for swivelling movement about a pin 10. The pin 10 extends parallel to the conveyor face 9 and substantially perpendicular to the direction of conveyance. In a first position, shown in Fig 1, the conveyor face part 9a forms a continuation of the inclined conveyor face 9. In a second position, the conveyor face part 9a releases an opening 11 in the conveyor face 9, leading to the storage space 5 for the rejected data carriers, such that the conveyance of the electronic data carriers from the read/write unit 1 to the storage space 5 takes place under the influence of gravity.

The conveying means 6, 7 comprise a first endless conveyor 6 provided with at least one catch finger 12 for bringing an electronic data carrier from the feed magazine 3 into an infeed position 8. Moreover, the conveying means comprise a second endless conveyor 7 provided with at least one catch finger 13 for bringing the electronic data carrier from the infeed position 8 into the read/write unit 1. Each of the endless conveyors 6, 7 is driven by its own motor 17, respectively 18. In the exemplary embodiment shown, the drive of the endless conveyors 6, 7 takes place via drive belts or chains 19, 20. The power supply 21 for the motors 17, 18 and the control electronics are located in the empty space under the inclined conveyor face 9 of the device. Through utilization of this space, the device can be of a compact design.

A part 7a of the second endless conveyor 7 extends in the direction of conveyance parallel to and directly under the inclined conveyor face 9. Provided in the conveyor face 9 is a slot 14 through which the or each catch finger 13 of the second endless conveyor 7 extends when it is located in this part 7a.

The feed magazine 3 is inclined and provided, near the bottom 3b of the magazine in a side wall 3a facing downward, with a slit 15, extending parallel to the bottom 3b of the magazine 3 and perpendicular to the direction of conveyance. Through the slit 15, the electronic data carriers can be moved from the feed magazine 3 to the lower positioned infeed position 8 on the conveyor face 9. At the lower end thereof, the infeed position 8 is bounded by the catch finger 13 of the endless conveyor 7, which catch finger 13 is then in a receiving position.

A part 6a of the first endless conveyor 6 extends parallel to, and directly under the bottom 3b of the feed magazine 3. The bottom 3b is provided with a slot 16, extending in the direction of conveyance, through which the or each catch finger 12 of the first endless conveyor 6 extends when it is located in this part 6a.

The slit 15 is at least partly closed by flexible strips or brushes (not shown) so as to prevent diskettes from automatically landing from the feed magazine 3 on the conveyor face 9 under the influence of gravity.

The operation of the device is as follows:
In the feed magazine 3, a stack of diskettes D are located. When no diskette is located on the conveyor face 9 or in the read/write unit 1, a diskette D is discharged from the magazine 3 via slit 15 by means of the first endless conveyor 6 and the catch finger 12. Under the influence of gravity, the diskette lands on the conveyor face 9, where it is stopped at the infeed position 8 by the catch finger 13. Subsequently, the catch finger 13, which is a part of the second conveyor 7, is moved upward, causing the diskette D to be pressed from the infeed position 8 into the read/write unit 1. After the required operations have been performed within the read/write unit, the control electronics give the read/write unit a signal for ejecting the diskette. Because of the inclined construction of the read/write unit 1 with the discharge opening 2 facing downward, the diskette D will move downward via the inclined conveyor face 9 under the influence of gravity. When the diskette D is being processed in the read/write unit 1, the control electronics have brought the catch finger 13 of the second endless conveyor 7 into such a position that it no longer extends through the slot 14 in the conveyor face 9, allowing the diskette D which is to be ejected to slide downward over the conveyor face 9 in an undisturbed manner. If the processing operations in the read/write unit 1 are successful, the folding conveyor face part 9a will be in the first position (shown in Fig. 1) and the diskette D slides over this conveyor face part 9a into the discharge magazine 4. If the processing operations in the read/write unit 1 are not successful, the control electronics of the device will bring the folding conveyor face part 9a into the second position (shown in Fig. 2) by means of, for instance, an electromagnetic tappet (not shown). In the second position of the folding conveyor face part 9a, an opening 11 in the conveyor face 9 is released, through which the diskette D moves whose processing in the read/write unit 1 was not successful. Consequently, such a diskette D ends up in the storage space 5 located under the conveyor face 9.

After the processed diskette has ended up in the storage space 5 or the discharge magazine 4, the above-described operations are repeated for a next diskette D to be processed.

As explained hereinabove, the read/write unit 1 can be designed for the reading and writing of diskettes, magnetic cards, chip cards or similar electronic data carriers.

It is understood that the invention is not limited to the exemplary embodiment described, but that various modifications are possible within the scope of the invention.

## Claims

1. A device for feeding electronic data carriers, such as diskettes, magnetic tapes, magnetic cards or chip cards, to, and discharging same from, a read/write unit (1) having a discharge opening (2), said device comprising a feed magazine (3), a discharge magazine (4) and conveying means (6, 7) for feeding the electronic data carrier to the read/write unit (1), and means (9a) adapted to guide the approved electronic data carriers to the discharge magazine (4) on the one hand and to guide rejected electronic data carriers to a storage space (5) on the other, characterized in that the read/write unit (1) is inclined, the discharge opening (2) thereof facing obliquely downward, with an inclined conveyor face (9), which extends in a direction of conveyance, connecting to the discharge opening (2) at an upwardly directed end thereof and to the discharge magazine (4) at a downwardly directed end, such that the conveyance of the electronic data carrier from the read/write unit (1) to the discharge magazine (4) takes place under the influence of gravity.

2. A device according to claim 1, characterized in that the means (9a) adapted to guide the approved electronic data carriers to the discharge magazine (4) on the one hand and to guide rejected electronic data carriers to a storage space (5) on the other comprise a folding part (9a) of the inclined conveyor face (9), said folding conveyor face part (9a) being mounted on a downwardly directed edge thereof for swivelling movement about a pin (10), said pin (10) extending parallel to the conveyor face (9) and substantially perpendicular to the direction of conveyance, the conveyor face part (9a) in a first position forming a continuation of the inclined conveyor face (9) and in a second position releasing an opening (11) in the conveyor face (9) leading to the storage space (5) for the rejected data carriers, such that the conveyance of the electronic data carriers from the read/write unit (1) to the storage space (5) takes place under the influence of gravity.

3. A device according to claim 1 or 2, characterized in that the conveying means comprise a first endless conveyor (6) provided with at least one catch finger (12) for bringing an electronic data carrier from the feed magazine (3) into an infeed position (8), and a second endless conveyor (7) provided with at least one catch finger (13) for bringing the electronic data carrier from the infeed position (8) into the read/write unit (1).

4. A device according to claim 3, characterized in that at least a part (7a) of the second endless conveyor (7) extends in the direction of conveyance parallel to and directly under the inclined conveyor face (9), there being provided in the conveyor face (9) a slot (14) through which the or each catch finger (13) of the second endless conveyor (7) extends when it is located in said part (7a).

5. A device according to claim 3 or 4, characterized in that the feed magazine (3) is inclined and provided, near a bottom (3b) of the magazine in a side wall (3a) facing downward, with a slit (15) extending parallel to the bottom (3b) of the magazine (3) and perpendicular to the direction of conveyance, through which slit (15) the electronic data carriers can be moved from the feed magazine (3) to the lower positioned infeed position (8), with at least a part (6a) of the first endless conveyor (6) extending parallel to, and directly under the bottom (3b) of the feed magazine (3), there being provided in the bottom (3b) a slot (16) extending in the direction of conveyance, through which the or each catch finger (12) of the first endless conveyor (6) extends when it is located in said part (6a).

6. A device according to claim 5, characterized in that the slit (15) is at least partly closed by flexible strips or brushes.

7. A device according to any one of the preceding claims, characterized in that the read/write unit (1) is a disc drive.

8. A device according to any one of claims 1-6, characterized in that the read/write unit (1) is adapted to read and write magnetic cards.

9. A device according to any one of claims 1-6, characterized in that the read/write unit (1) is adapted to read and write magnetic tapes.

10. A device according to any one of claims 1-6, characterized in that the read/write unit (1) is adapted to read and write chip cards.
